(19) Europäisches Patentamt
European Patent Office
Office européen des brevets

(11) Publication number: **0 251 712**
**A2**

(12) # EUROPEAN PATENT APPLICATION

(21) Application number: 87305674.1

(51) Int. Cl.⁴: **C08K 5/52**, C08L 67/02

(22) Date of filing: 25.06.87

(30) Priority: 02.07.86 JP 155672/86

(43) Date of publication of application:
07.01.88 Bulletin 88/01

(84) Designated Contracting States:
AT BE CH DE ES FR GB GR IT LI LU NL SE

(71) Applicant: POLYPLASTICS CO. LTD.
30, Azuchimachi 2-chome
Higashi-ku Osaka-shi Osaka(JP)

(72) Inventor: Nakatsuji, Hiroshi
91-19, Miyashita
Fuji-shi Shizuoka(JP)
Inventor: Nakai, Mikio
885-11, Miyajima
Fuji-shi Shizuoka(JP)
Inventor: Nakano, Michio
885-11, Miyajima
Fuji-shi Shizuoka(JP)

(74) Representative: Livsey, Gilbert Charlesworth Norris et al
HYDE, HEIDE & O'DONNELL 146 Buckingham Palace Road
London SW1W 9TR(GB)

(54) **Thermoplastics polyester resin composition.**

(57) A thermoplastic polyester resin composition having excellent heat stability and retaining good properties in long-term use at elevated temperatures comprises 100 parts by weight of a thermoplastic polyester and, in mixture therewith, 0.001 ~ 5 parts by weight of one or more different phosphoric compounds represented by the general formula (I):

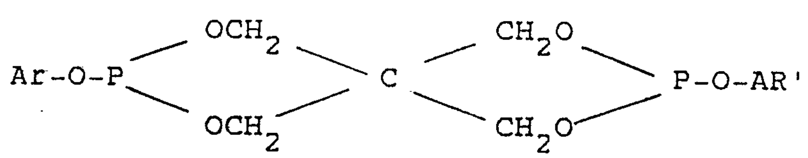

...... (I)

(in which Ar and Ar' represent aryl or substituted aryl groups having 6 ~ 35 carbon atoms, which may be identical with or different from each other.) The compounds of formula (I) have been found to act synergistically with 0.001 ~ 5 parts by weight of hindered phenolic compounds.

The polyester resin may be blended with other thermoplastic resins. The composition may be filled with glass fillers and organo-halogen compounds and organophosphorous compounds may be present as flame retardants optionally with metal oxide or hydroxide flame retarding auxiliaries.

EP 0 251 712 A2

# THERMOPLASTIC POLYESTER RESIN COMPOSITION

## Field of the Invention

The present invention relates to a thermoplastic polyester resin composition and a method for preparation thereof. The invention enables a thermoplastic polyester resin composition having excellent heat stability and long-term properties under high temperatures to be produced in a simple and reproducible manner. A resin composition in accordance with the invention can advantageously be used for various applications, such as exterior elements and structural components, and in such industrial fields such as automobiles, machinery, building, and electrical and electronic equipment.

## Background to the Invention

Thermoplastic polyester resins are widely used in various industrial fields because of their excellent mechanical, physical, and chemical properties and because of their outstanding processability. However, with the development and diversification of applications for such resins, higher performance characteristics and special properties are often demanded of the resin. For example, the resin is often required to have good heat stability during molding or processing operations, at high temperatures or good stability to long-term use under high temperature conditions. In order to meet such requirements, it has been proposed to add to the thermoplastic polyester stabilisers such as phenolic compounds, amine compounds, phosphates, phosphonates, phosphoric esters, phosphites, or the like. Although such stabilisers may slightly improve the heat stability or long-term properties of the thermoplastic polyester, they are not a complete answer. Moreover, thermoplastic polyester resin compositions are often required to have flame retardant properties in addition to the aforesaid properties, and to this end it is usual either to incorporate a halogen compound, more particularly a bromine compound, into the molecular chain of the polyester through copolymerisation or to blend such compound with the polyester resin into a composition, using an antimony compound or the like as a flame retardant auxiliary in this conjunction. However, the presence of such flame retardant tends to deteriorate the polyester resin and this makes it all the more necessary that such resin composition should have better stability characteristics and long-term properties in particular.

## Summary of the Invention

This invention provides a thermoplastic polyester resin composition having excellent heat stability and good long-term properties, comprising 100 parts by weight of a thermoplastic polyester and, in mixture therewith, 0.001~5 parts by weight of one or more phosphoric compounds expressed by the general formula (I):

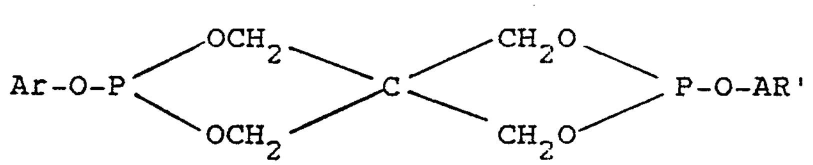

...... (I)

(in which Ar and Ar' represent aryl or substituted aryl groups having 6 ~ 35 carbon atoms, which may be identical with or different from each other.)

It has been found experimentally that by mixing such a class of phosphoric compounds with the thermoplastic polyester it is possible to improve the heat stability and long-term properties of the resin significantly and further that if the active compound is added in the course of preparation of the thermoplastic polyester, then decomposition of the polyester resin in the course of its preparation is inhibited, which permits stable and reproducible preparation of compositions according to the invention.

Description of Preferred Features

It has been found experimentally that the use of 0.001~5 parts of weight of a hindered phenolic compound in combination with a phosphoric compound of formula (I) in admixture with 100 parts by weight of the thermoplastic polyester results in a further significant improvement of heat stability and long-term properties of of the resin through a synergistic effect of the combination.

The thermoplastic polyester used in the invention may be any polyester produced by polycondensation of a dicarboxylic acid compound and a dihydroxy compound, or of an oxycarboxylic acid compound, or polycondensation of a mixture of these three components, which includes any homopolyester or copolyester.

Dicarboxylic acid compounds useful for this purpose include, by way of example, various known dicarboxylic acid compounds, such as terephthalic acid, isophthalic acid naphthalene dicarboxylic acid, diphenyldicarboxylic acid, diphenylether dicarboxylic acid, diphenylethane dicarboxylic acid, cyclohexane dicarboxylic acid, adipic acid, and sebacic acid, and alkyl, alkoxy, or halogen substituents thereof. These dicarboxylic acid compounds may be used in the form of an esterifiable derivative, for example, a lower alkohol ester, such as a dimethyl ester. One or more dicarboxylic acid compounds may be present in the polyester.

Examples of dihydroxy compounds include ethylene glycol, propylene glycol, butanediol, neopentyl glycol, hydroquinone, resolcin, dihydroxyphenyl, naphthalene diol, dihydroxydiphenyl ether, cyclohexane diol, and 2,2-bis (4-hydroxyphenyl) propane, and alkyl, alkoxy, or halogen substituents of these dihydroxy compounds. One or more different such compounds may be used in admixture with one another to form the polyester.

Examples of oxycarboxylic acid compounds include oxybenzoate, oxynaphthoic acid, and diphenylene oxycarboxylic acid, and alkyl, alkoxy, or halogen substituents thereof. Esterifiable derivatives of these compounds may also be used. For the purpose of the invention, one or more different compounds may be used as such.

Any thermoplastic polyester produced by polycondensation of any such compound as above mentioned which is used as a monomer component therein, is useful for the purpose of the invention. Such a polyester may be used either alone or in the form of a mixture of two or more different compounds. Preferably, polyalkylene terephthalate is used as such, or more preferably polybutylene terephthalate, to obtain good effects in this invention. Any completely aromatic polyester and any anisotropic melt-phase forming polyester are also advantageously used.

In the present invention, a thermoplastic polyester modified by a known technique, such as cross-linking, graft polymerisation, or the like, or depending upon the purpose for which the composition of the invention is used, a mixture of a thermoplastic polyester and a different kind of thermoplastic resin may also be used advantageously used as a base resin.

Examples of thermoplastic resins useful for mixture with such thermoplastic polyester include polyethylene, polypropylene, ethylene-propylene copolymers, ethylene-vinyl acetate copolymers, ethylene-acrylic ester copolymers, polyamides, polyacetals, polystyrene, styrene-butadiene copolymers, styrene-butadiene-acrylonitrile copolymers, styrene-butadiene-acrylic acid (or ester thereof) copolymers, styrene-acrylonitrile copolymers, polycarbonates, polyurethanes, fluorine plastic, polyphenylene oxides, polyphenylene sulphides, polybutadiene, polyolefin halide, polyvinyl halide, butyl rubber, silicone resin, polyacrylate-based multigraft copolymer, and modifications of the foregoing resins. These optional substances may be selectively used, according to the properties desired for the composition, in any suitable proportion(s) in combination with the thermoplastic polyester.

Values for Ar and Ar′ in Formula (1) include phenyl, naphthyl and diphenyl groups having optionally alkyl, hydroxy, and/or alkoxy substituents. More particularly, bis (2,4-di-t-butylphenyl) pentaerythritol diphosphite, bis (nonyl-phenyl) pentaerythritol diphosphite, 4-phenoxy-9-α-(4-hydroxyphenyl)-p-cumenyloxy-3,5,8.10-tetra oxa-4,9-diphosphuspiro (5,5) undecane, may be employed.

One or more different such particular phosphoric compounds of formula (I) may be used in admixture with the thermoplastic polyester in the proportion of 0.001~5 parts by weight relative to 100 parts by weight of the latter. If the proportion of such compound(s) is less than 0.001 part by weight, the stability and long-term properties are not satisfactory. Use of more than 5 parts by weight of such compound is economically unjustifiable because a saturation point has been reached beyond which no further heat stability improvement is expected. Furthermore, an excess of the compound of formula (I) is undesirable because it can significantly decrease the mouldability and strength characteristics of the polyester. From the standpoint of effective use for heat stability improvement, high temperature properties, and economy, such compound is preferably used in an amount of 0.01 ~ 1 parts by weight, or more preferably 0.03 ~ 0.5 parts by weight.

It has been found that addition of one or more phosphoric compound(s) of Formula (I) on its or their own to the thermoplastic polyester can significantly improve the heat stability and other characteristics of the polyester. More desirably, however, a hindered phenolic compound is added as well as the phosphoric compound(s), which two compounds in combination produce a synergistic effect so that the heat stability and other characteristics of the polyester can be further improved. The hindered phenolic compound used in the invention is any phenolic compound having a bulky substituent, for example, a substituent having four or more carbon atoms, at a position adjacent to a phenolic hydroxyl group. Examples of such compounds include 2,6-di-t-butyl-4-methyl phenol, 4.4'-butylidene-bis (6-t-butyl-3-methyl phenol), 2.2'-methylene-bis (4-methyl-6-t-butyl phenol), 1,6-hexanediol-bis [3-(3,5-di-t-butyl-4-hydroxyphenyl) propionate], pentaerythritol-tetrakis [3-(3,5-di-t-butyl-4-hydroxyphenyl) propionate], triethylene glycol-bis [3-(3-t -butyl-5-methyl-hydroxyphenyl) propionate], and octadecyl-3-(3,5-di-t-butyl-4-hydroxyphenyl) propionate].

One or more different hindered phenolic compounds may be used for admixture in the proportion of 0.001 ~ 5 parts by weight relative to 100 parts by weight of the thermoplastic polyester. Such hindered phenolic compound, if added independently to the thermoplastic polyester, gives rise to little or no improvement in the heat stability characteristics or other properties in the latter, and only when it is added to the polyester in combination with aforesaid particular phosphoric compounds is a synergistic effect produced. If the proportion of such compound is smaller than 0.001 part by weight, no significant synergistic improvement in heat stability is obtained. Use of more than 5 parts by weight of such compound is economically unjustifiable because a saturation point has already been reached beyond which no further heat stability improvement is expected, and is rather undesirable because it is likely to lower the strength and moldability characteristics of the polyester. A generally preferred proportion is 0.01 ~ 1 part by weight, and more preferably it is 0.03 ~ 0.5 part by weight.

This invention is not only effective for improvement of the heat stability and long-term properties of a thermoplastic polyester resin composition containing no inorganic filler. It is also applicable with significant effect to a composition reinforced and modified by addition of a glass filler material or to a composition having flame retardant properties imparted thereto through incorporation of a flame retardant and a flame retarding auxiliary. Useful glass fillers include glass fibres, glass flakes, glass beads, milled fibreglass, and powdery glass, and they may be of any desired size and configuration according to the purpose for which they are used. In order to provide better bond with the resin and better reinforcing effect, these glass fillers may be surface treated with a finishing or coupling agent prior to addition or may be added simultaneously with such agent. Two or more kinds of glass fibres having different shapes may be used in combination in order to obtain their composite effect.

For use as flame retardants, organic halogen compounds and phosphoric compounds may be mentioned, and more especially aromatic bromine compounds are preferred. Typical examples of such compounds are low-molecular weight bromine compounds, such as 5 - 10 bromine substituted compounds of diphenyl ether; bromides of aromatic carbonatesor epoxy compound monomers derived from bisphenol A, and polymers thereof; polystyrene obigomer bromides; and brominated cyanurate compounds. One or more different such compounds may be used in mixture with the resin. For use as flame retarding auxiliaries, metallic oxides and hydroxides, such as antimony trioxide, antimony halide, aluminium hydroxide, and magnesium hydroxide, may be mentioned. Generally, addition of such flame retarder and flame retarding auxiliary tends to adversely affect the heat stability characteristics of the thermoplastic polyester and accelerate the deterioration thereof. With flame-retarded polyester compositions, therefore, there are pressing needs for improvement of their heat stability characteristics. The present invention is effectively applicable to such flame-retarded polyester as well, with a remarkable advantage.

Furthermore, depending on the purpose for which the composition of the invention is used, it is possible to incorporate by admixture into the composition various known substances which are usually added to conventional thermoplastic and/or thermosetting resins. These known substances include, for example, various kinds of stabilisers for light resisting and weathering purposes, colourants, release agents, plasticisers, nucleating agents, antistatic agents, surface active agents, and lubricants; also fibrous, lamellar, granular, and powdery inorganic and organic compounds, such as carbon fibre, metallic fibre, boron fibre, potassium titanate, ceramics, micas, clay, talc, asbestos, highly dispersable silicates, ground quartz, silica sand, wollastonite, carbon black, graphite, various kinds of metallic powder, metallic foils, silicon carbide, boron nitride, and silicon nitride.

The composition in accordance with this invention may easily be prepared by known techniques employed generally in the preparation of conventional resin compositions. For example, individual components can be mixed together, then the mixture is integrally extruded by an extruder, being thereby prepared into pellets, and subsequently the pellets are subjected to moulding. Another method is that pellets of

different compositions are first prepared and then mixed together in specified proportions, the mixture being subjected to moulding so that a molding of the desired composition is obtained. Another method is that one or more of the individual components are charged directly into the moulding machine. Any of these methods may be employed.

The particular phosphoric compound, an essential component for the composition of the invention, and where used in combination therewith, a hindered phenolic compound, may be added wholly or in part at any stage of the thermoplastic polyester manufacturing or processing process. Especially where these components are added into the stock at the monomer stage or at a comparatively early stage of polycondensation, so that they are present in the reaction system in the course of progress of polycondensation, polymerisation can be effectively performed, presumably because decomposition in the process of polymerisation may be inhibited. More particularly, where polycondensation under melt conditions is caused to proceed for an extended period in order to obtain a high-molecular weight polyester, or where after a melt reaction product is solidified, solid phase polymerisation is carried out for an extended period, the presence of aforesaid components in the reaction system contributes to preventing any property deterioration in the course of reaction and thus effectively facilitates production of a high-molcular weight polyester. To such end, aforesaid essential component should preferably be added prior to the polycondensation stage. Such method is also advantageously employed in the preparation of the resin composition according to the invention.

## Examples

The following examples and comparative examples illustrate the invention. It is to be understood, however, that the invention is not limited by these examples.

Evaluation of heat stability performance was carried out according to the following methods, provided that the methods were selectively employed.

1) Heat stability (long-term properties) of test pieces:

ASTM tensile test pieces and colour shade testing flat bars were moulded from resin compositions in individual examples and comparative examples, by employing an injection moulder set to a cylinder temperature of 250°C. Measurements were made of these test pieces in respect of tensile strength (initial value) and colour shade (initial value). Subsequently, required numbers of test pieces were placed in a gear oven set to a temperature of 180°C and heat treated therein under hot air circulation. After each specified period of treatment, evaluation was made in respect of the following:

$$\text{Strength retention (\%)} = \frac{\text{tensile strength after heat treatment}}{\text{initial tensile strength}} \times 100$$

$$\text{Change in colour shade } (\Delta E) = \sqrt{(L - L_o)^2 + (a - a_o)^2 + (b - b_o)^2}$$

where

$L_o$, $a_o$, $b_o$ .....initial colour shade

L , a , b .....colour shade after heat treatment

2) Heat stability under melt:

The resin was detained for 30 min in the cylinder of a molding machine set to a temperature of 260°C, and then the resin was moulded into tensile test pieces. Tensile strength was measured of the test pieces. Heat stability was determined according to the following equation:

$$\text{Under melt heat stability (\%)} = \frac{\text{tensile strength after 30 min detention}}{\text{tensile strength under ordinary molding}} \times 100$$

Examples 1 ~ 5; Comparative Examples l ~ 3

To 100 parts by weight of a polybutylene terephthalate having an inherent viscocity of 1.0 were added for mixture therewith 6 parts by weight of decabromodiphenyl ether, as a flame retarder, and 3 parts by weight of antimony trioxide, as a flame retardant auxiliary. Further, a specific phosphoric compound of such composition as shown in Table 1 was added. A pellet-form composition was prepared from the mixture by employing a twin-screw extruder. Test pieces were made by injection moulding from the pellets so prepared. Their strength retention and shade change after heat treatment were evaluated according to aforesaid methods.

For the purposes of comparison, similar tests were made with respect to test pieces made from compositions incorporating no such specific phosphoric compound and those incorporating a phosphoric compound different from such particular phosphoric compound.

Test results are as shown in Table 1 for both the examples and the comparative examples.

Examples 6, 7; Comparative Examples 4, 5

The formulations of Examples 2 and 5 were each used as a base. A hindered phenolic compound was mixed with the base component. Evaluation was made in same manner as in said examples.

For the purpose of comparison, a composition incorporating no specific phosphoric compound or hindered phenolic compound (Comparative Example 1) and those incorporating a hindered phenolic compound were also evaluated in the like manner.

The results are shown in Table 2.

Examples 8, 9; Comparative Examples 6, 7

To 100 parts by weight of a polybutylene terephthalate having an inherent viscosity of 0.75 were added 40 parts by weight of glass fibres (with an inner diameter of 9μ and a fibre length of 6 mm). Further, a particular phosphoric compound was added in Example 8, while a particular phosphoric compound and a hindered phenolic compound were added in combination. Evaluation was made in same manner as in the foregoing examples.

For comparison, a composition incorporating no phosphoric compound or hindered phenolic compound, and one incorporating a hindered phenolic compound only and no phosphoric compound were also evaluated in the like manner.

The results are shown in Table 3.

Examples 10 ~ 13; Comparative Examples 8 ~ 10

To 100 parts by weight of a polybutylene terephthalate having an inherent viscosity of 0.75 were added for mixture therewith 40 parts by weight of glass fibres (with an inner diameter of 13μ and a fibre length of 6 mm), 20 parts by weight of a bromine-based flame retarder, 12 parts by weight of antimony trioxide, 8 parts by weight of asbestos, and 20 parts by weight of a polycarbonate resin. Further, as Table 4 shows, a

particular phosphoric compound was further added in some of the examples, and a combination of such phosphoric compound and a hindered phenolic compound was added in the other examples. In one of the comparative examples, neither phosphoric compound nor hindered phenolic compound was added. In the other comparative examples, a hindered phenolic compound only was added and no phosphoric compound. Evaluation was made of individual compositions thus prepared, with respect to their strength retention after heat treatment and their under-melt heat stability characteristics in accordance with above described methods.

The results are shown in Table 4.

Examples 14, 15; Comparative Examples

A complete aromatic polyester resin produces by a reaction between 70 mol % of 4-acetoxy benzoic acid and 30 mol % of 6-acetoxy-2-naphthoic acid was used, and to this resin was added a particular phosphoric compound and/or hindered phenolic compound of such composition as specified in Table 5. Evaluation was made in accordance with aforesaid methods.

The polyester resin used here was of the anisotropic melt-phase forming type and had an inherent viscosity of 5,4 as measured in a pentafleurophenol of 0.1 wt % concentration at 60°C. Heat treatment was effected at 250°C and evaluation was made in terms of strength retention percentage after heat treatment.

The results are shown in Table 5.

As is apparent from the foregoing description and examples, by adding to a thermoplastic polyester resin for mixture therewith a particular phosphoric compound expressed by aforesaid equation (I), the heat stability and long-term properties of the polyester resin can be remarkably improved. Use of a hindered phenolic compound in combination with said phosphoric compound results in further improvement through their synergistic effect. Thus it has now become possible to have a thermoplastic polyester resin composition having remarkably improved heat stability and long-term properties that could never been obtained by the conventional techniques.

Table 1

| | | Composition | | Tensile strength | | | | | | Color shade | |
|---|---|---|---|---|---|---|---|---|---|---|---|
| | | Heat stability improver | concentration (wt part) | Initial value ($kg/cm^2$) | Strength retention (%) after heat treatment | | | | | Initial value $L_o/a_o/b_o$ | Shade change after 5 day heat treatment ($\Delta E$) |
| | | | | | 5 days | 10 days | 20 days | 30 days | 40 days | | |
| Example | 1 | Phosphoric compound-1 *1 | 0.1 | 567 | 104 | 102 | 92 | 78 | 64 | 91.2/-0.5/4.0 | 21.6 |
| | 2 | " " | 0.2 | 562 | 105 | 104 | 95 | 83 | 70 | 91.1/-0.5/3.8 | 18.7 |
| | 3 | " " | 0.3 | 565 | 104 | 103 | 95 | 86 | 71 | 91.2/-0.4/4.0 | 17.2 |
| | 4 | Phosphoric compound-2 *2 | 0.2 | 563 | 103 | 104 | 90 | 75 | 63 | 91.2/-0.5/4.0 | 22.3 |
| | 5 | Phosphoric compound-3 *3 | 0.2 | 567 | 106 | 104 | 94 | 82 | 68 | 91.3/-0.4/3.9 | 21.4 |
| Comp. Example | 1 | - | - | 561 | 93 | 74 | 63 | 50 | 44 | 90.8/-0.4/4.1 | 44.8 |
| | 2 | Tridecyl phosphite | 0.2 | 564 | 95 | 81 | 67 | 57 | 48 | 91.3/-0.5/4.1 | 37.2 |
| | 3 | Triphenyl phosphite | 0.2 | 567 | 98 | 82 | 70 | 61 | 50 | 91.2/-0.4/4.1 | 34.8 |

Notes:

*1: bis (2,4-di-t-butylphenyl) pentaerythritol diphosphite

*2: bis (nonyl phenyl) pentaerythritol diphosphite

*3: 4-phenoxy-9-$\alpha$-(4-hydroxyphenyl)-p-cumenyloxy-3,5,8,10-tetraoxa-4,9-diphosphaspiro [5,5] undecan

Table 2

| | | Composition | | Tensile strength | | | | | | Color shade | |
|---|---|---|---|---|---|---|---|---|---|---|---|
| | | Heat stability improver | Concentration (wt part) | Initial value ($kg/cm^2$) | Strength retention (%) after heat treatment | | | | | Initial value $L_o/a_o/b_o$ | Shade change after 5-day heat treatment ($\Delta E$) |
| | | | | | 5 days | 10 days | 20 days | 30 days | 40 days | | |
| Example | 6 | Phosphoric compound-1*1<br>Hindered phenolic compound-1*2 | 0.2<br>0.1 | 566 | 105 | 106 | 101 | 92 | 86 | 91.3/-0.5/4.1 | 14.2 |
| | 7 | Phosphoric compound-3*3<br>Hindered phenolic compound-2*4 | 0.2<br>0.1 | 568 | 105 | 104 | 100 | 90 | 86 | 91.2/-0.5/3.8 | 15.3 |
| Comp Example | 1 | - | - | 561 | 93 | 74 | 63 | 50 | 44 | 90.8/-0.4/4.1 | 44.8 |
| | 4 | Hindered phenolic compound-1*2 | 0.1 | 567 | 92 | 76 | 64 | 52 | 45 | 91.1/-0.4/4.0 | 41.2 |
| | 5 | Hindered phenolic compound-2*4 | 0.1 | 563 | 93 | 75 | 61 | 54 | 45 | 91.2/-0.5/3.9 | 40.5 |

Notes)

*1: bis (2,4-di-t-butylphenyl) pentaerythritol diphosphite

*2: pentaerythrityl-tetrakis [3-(3,5-di-t-butyl-4-hydroxyphenyl) propionate

*3: 4-phenoxy-9-α-(4-hydroxyphenyl)-p-cumenyloxy-3,5,8,10-tetraoxa-4,9-diphosphaspiro [5,5] undecan

*4: triethylene glycol-bis [3-(3-t-butyl-5-methyl-4-hydroxyphenyl) propionate

Table 3

| | | Composition | | Tensile strength | | | | | | Color shade | |
|---|---|---|---|---|---|---|---|---|---|---|---|
| | | Heat stability Improver | Concentration (wt part) | Initial value ($kg-cm^2$) | Strength retention (%) after heat treatment | | | | | Initial value $L_o/a_o/b_o$ | Shade change after 50-day heat treatment ($\Delta E$) |
| | | | | | 10 days | 20 days | 30 days | 40 days | 50 days | | |
| Example | 8 | Phosphoric compound-1 *1 | 0.3 | 1356 | 110 | 107 | 101 | 94 | 88 | 78.2/-1.7/6.6 | 16.1 |
| Example | 9 | Phosphoric compound-1 *1<br>Hindered phenolic compound-2 *2 | 0.3<br>0.3 | 1348 | 107 | 108 | 104 | 98 | 95 | 78.3/-1.7/6.5 | 12.2 |
| Comp. Example | 6 | - | - | 1362 | 106 | 101 | 86 | 72 | 61 | 78.3/-1.7/6.6 | 26.7 |
| Comp. Example | 7 | Hindered phenolic compound-2 *2 | 0.3 | 1363 | 108 | 102 | 85 | 73 | 63 | 78.3/-1.7/6.5 | 24.3 |

Notes)

*1: bis (2,4-di-t-butylphenyl) pentaerythritol diphosphite

*2: triethylene glycol-bis [3-(3-t-butyl-5-methyl-4-hydroxyphenyl) propionate

Table 4

| | | Composition | | Tensile strength | | | | | Heat stability under melt (%) |
|---|---|---|---|---|---|---|---|---|---|
| | | Heat stability improver | Concentration (wt part) | Initial value ($kg/cm^2$) | Strength retention (%) after heat treatment 10 days | 20 days | 30 days | 40 days | |
| Example | 10 | Phosphoric compound-1 *1 | 0.2 | 1218 | 105 | 95 | 86 | 79 | 81 |
| | 11 | " " | 0.4 | 1190 | 104 | 98 | 88 | 78 | 82 |
| | 12 | Phosphoric compound-1 *1<br>Hindered phenolic compound-3 *2 | 0.2<br>0.2 | 1181 | 107 | 102 | 97 | 85 | 85 |
| | 13 | Phosphoric compound-1 *1<br>Hindered phenolic compound-3 *2 | 0.4<br>0.4 | 1165 | 105 | 101 | 98 | 88 | 87 |
| Comp. Example | 8 | - | - | 1205 | 98 | 78 | 63 | 51 | 62 |
| | 9 | Hindered phenolic compound-3 *2 | 0.2 | 1195 | 96 | 80 | 65 | 52 | 63 |
| | 10 | " | 0.4 | 1178 | 99 | 78 | 65 | 54 | 62 |

Note)

*1: bis (2,4-di-t-butylphenyl) pentaerythritol diphosphite

*2: 1,6-hexanediol-bis (3-(3,5-di-t-butyl-4-hydroxyphenyl) propionate

Table 5

| | | Composition | | Tensile strength | | | | |
|---|---|---|---|---|---|---|---|---|
| | | Heat stability improver | Concentration (wt part) | Initial value (kg/cm$^2$) | Strength retention (%) after heat treatment *3 | | | |
| | | | | | 20 days | 50 days | 100 days | 150 days |
| Example | 14 | Phosphoric compound-1 *1 | 0.2 | 2130 | 109 | 108 | 94 | 83 |
| | 15 | Phosphoric compound-1 *1 / Hindered phenolic compound-1 *2 | 0.2 / 0.2 | 2121 | 108 | 109 | 105 | 93 |
| Comp. Example | 11 | Hindered phenolic compound-1 *2 | 0.2 | 2126 | 110 | 108 | 73 | 61 |
| | 12 | - | - | 2102 | 108 | 106 | 70 | 62 |

Note)

*1: bis (2,4-di-t-butylphenyl) pentaerythritol diphosphite

*2: pentaerythrityl-tetrakis (3-(3,5-di-t-butyl-4-hydroxyphenyl) propionate

*3: heating at 250$^\circ$C

## Claims

1. A thermoplastic polyester resin composition comprising 100 parts by weight of a thermoplastic polyester and, in mixture therewith, 0.001 ~ 5 parts by weight of one or more different phosphoric compounds represented by the general formula (I):

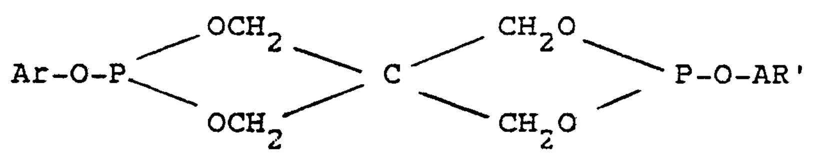

...... (I)

(in which Ar and Ar′ represent aryl or substituted aryl grouPs having 6 ~ 35 carbon atoms, which may be identical with or different from each other.)

2. The composition of claim 1, wherein Ar and Ar′ in formula (I) represent phenyl, naphthyl, diphenyl groups having optionally alkyl, hydroxy, and/or alkoxy substituents.

3. The composition of claim 1, wherein the compound of formula (I) is bis (2,4-di-t-butylphenyl) pentaerythritol diphosphite, bis (nonyl-phenyl) pentaerythritol diphosphite, or 4-phenoxy-9-α-(4-hydroxyphenyl)-p-cumenyloxy-3,5,8.10-tetraoxa-4.9-diphosphuspiro (5,5) undecane.

4. The composition of claim 1, wherein the compound of formula (I) is present in an amount of 0.03 ~ 0.5 parts by weight per 100 parts by weight of the polyester.

5. The composition of any preceding claim further comprising 0.001 ~ 5 parts by weight of a hindered phenolic compound.

6. The composition of claim 5, wherein the hindered phenolic compound is 2,6-di-t-butyl-4-methyl phenol, 4,4′-butylidene-bis (6-t-butyl-3-methyl phenol), 2,2′-methylene-bis (4-methyl-6-t-butyl phenol), 1,6-hexanediol-bis [3-(3,5-di-t-butyl-4-hydroxyphenyl) propionate], pentaerythritol-tetrakis [3-(3,5-di-t-butyl-4-hydroxyphenyl) propionate], triethylene glycol-bis [3-(3-t -butyl-5-methyl-hydroxyphenyl) propionate], or octadecyl-3-(3,5-di-t-butyl-4-hydroxyphenyl) propionate].

7. The composition of any preceding claim further comprising one or more of:-

a) glass fibres, glass flakes, glass beads, milled fibreglass or powdered glass;

b) a flame retardant which is an organohalogen compound or an organophosphorous compound; and

c) a flame retardant auxiliary which is a metallic oxide or hydroxide.

8. The composition of any preceding claim, wherein the thermoplastic polyester is selected from

a) polybutylene terephthalate;

b) a polyalkylene terephthalate other than (a);

c) a completely aromatic polyester;

d) a polyester that forms an anisotropic melt phase; and

e) a mixture of a polyester with a second thermoplastic resin which is polyethylene, polypropylene, an ethylene-propylene copolymer, an ethylene-vinyl acetate copolymer, an ethylene-acrylic ester copolymer, a polyamide, a polyacetal, polystyrene, a styrene-butadiene copolymer, a styrene-butadiene-acrylonitrile copolymer, a styrene-butadiene-acrylic acid (or ester thereof) copolymer, a styrene-acrylonitrile copolymer, a polycarbonate, a polyurethane, a fluorine plastic, a polyphenylene oxide, a polyphenylene sulphide, polybutadiene, a polyolefin halide, a polyvinyl halide, butyl rubber, a silicone resin, a polyacrylate-based multigraft copolymer, and modifications of the foregoing resins.

9. The composition of any preceding claim, wherein the phosphoric compound of formula (I) and the hindered phenolic compound (if any) has or have been present in the thermoplastic polyester from the monomer stage of its preparation or form an early stage of polycondensation.